# EUROPEAN PATENT APPLICATION

(11) **EP 4 557 418 A1**
(43) Date of publication of application: **21.05.2025**
(21) Application number: 24205340.3
(22) Date of filing: 08.10.2024
(51) Int. Cl.: H01M 10/04, H01M 10/0525, H01M 10/0583, H01M 50/103

(54) **NON-AQUEOUS ELECTROLYTE SECONDARY BATTERY, BATTERY ASSEMBLY, AND VEHICLE**

(30) Priority: 15.11.2023 JP 2023194372
(71) Applicant: Prime Planet Energy & Solutions, Inc., Chuo-ku, Tokyo 103-0022 (JP)
(72) Inventor: NISHIDA, Akira, Tokyo, 103-0022 (JP)
(74) Representative: Kuhnen & Wacker Patent- und Rechtsanwaltsbüro PartG mbB

(57) **Abstract**

A case (100) includes a case main body (110) provided with a first opening (113) and a second opening (114) at its respective end portions in a first direction. A first electrode (210) is longer than a second electrode (240) in a second direction orthogonal to the first direction. The first electrode (210) and the second electrode (240) are alternately stacked in a third direction orthogonal to each of the first direction and the second direction. A separator (800) has a meandering shape including a first folded portion (810) and a second folded portion (820) provided at respective end portions of the first electrode (210) and the second electrode (240) in the second direction. The first folded portion (810) of the separator (800) at the end portion of the first electrode in the second direction is located below the first electrode (210) when the non-aqueous electrolyte secondary battery (1) is mounted on a vehicle such that the second direction is oriented in an upward/downward direction.

## Description

### CROSS REFERENCE TO RELATED APPLICATIONS

This nonprovisional application is based on Japanese Patent Application No. 2023-194372 filed on November 15, 2023 with the Japan Patent Office, the entire contents of which are hereby incorporated by reference.

### BACKGROUND OF THE INVENTION

### Field of the Invention

The present technology relates to a non-aqueous electrolyte secondary battery, a battery assembly, and a vehicle.

### Description of the Background Art

U.S. Patent Publication No. 2022/0302533 discloses a secondary battery in which a positive electrode terminal is provided at one end of a case and a negative electrode terminal is provided at the other end of the case.

Japanese Patent Laying-Open No. 2012-190548 discloses that a separator interposed between a positive electrode plate and a negative electrode plate of a secondary battery is formed to have a meandering shape.

### SUMMARY OF THE INVENTION

When an active material falls from an electrode accommodated in a case and the active material having fallen reaches an opposite electrode, an internal short circuit can occur. From the viewpoint of improving reliability of the battery, this is required to be suppressed.

An object of the present technology is to provide a non-aqueous electrolyte secondary battery having high reliability, a battery assembly including the non-aqueous electrolyte secondary battery, and a vehicle including the non-aqueous electrolyte secondary battery.

The present technology provides the following non-aqueous electrolyte secondary battery, battery assembly, and vehicle.
[1] A non-aqueous electrolyte secondary battery mounted on a vehicle, the non-aqueous electrolyte secondary battery comprising: an electrode assembly in which a first electrode and a second electrode are stacked with a separator being interposed between the first electrode and the second electrode; an electrode terminal connected to the first electrode or the second electrode; and a case that accommodates the electrode assembly and an electrolyte solution, wherein the case includes a case main body provided with a first opening at one end portion of the case main body in a first direction and a second opening at the other end portion of the case main body in the first direction, a first sealing plate that seals the first opening, and a second sealing plate that seals the second opening, the electrode terminal is attached to one of the first sealing plate and the second sealing plate, the first electrode is longer than the second electrode in a second direction orthogonal to the first direction, the first electrode and the second electrode are alternately stacked in a third direction orthogonal to each of the first direction and the second direction, the separator has a meandering shape including a first folded portion and a second folded portion provided at respective end portions of the first electrode and the second electrode in the second direction, and the first folded portion of the separator at the end portion of the first electrode is located below the first electrode when the non-aqueous electrolyte secondary battery is mounted on the vehicle such that the second direction is oriented in an upward/downward direction.
[2] The non-aqueous electrolyte secondary battery according to [1], wherein the first electrode is a negative electrode.
[3] The non-aqueous electrolyte secondary battery according to [2], wherein an active material of the negative electrode includes carbon.
[4] The non-aqueous electrolyte secondary battery according to [2] or [3], wherein the electrode assembly has a main body portion, a negative electrode tab located on the first sealing plate side with respect to the main body portion and provided on the first electrode, and a positive electrode tab located on the second sealing plate side with respect to the main body portion and provided on the second electrode, the first electrode includes a negative electrode core body and a negative electrode active material layer formed on the negative electrode core body, the second electrode includes a positive electrode core body, a positive electrode active material layer formed on the positive electrode core body, and a positive electrode protective layer formed on the positive electrode core body, the positive electrode protective layer is located on the positive electrode tab side with respect to the positive electrode active material layer, and at an end portion of the main body portion of the electrode assembly on the positive electrode tab side, the positive electrode protective layer protrudes to the positive electrode tab side with respect to an end portion of the negative electrode active material layer.
[5] The non-aqueous electrolyte secondary battery according to any one of [1] to [4], wherein the non-aqueous electrolyte secondary battery is a lithium ion secondary battery.
[6] The non-aqueous electrolyte secondary battery according to any one of [1] to [5], wherein the electrode terminal is disposed on one side with respect to a center of the case in the second direction, and the first folded portion is disposed opposite to the electrode terminal with respect to the center.
[7] The non-aqueous electrolyte secondary battery according to any one of [1] to [6], wherein an injection hole for injecting the electrolyte solution into the case is provided in the first sealing plate or the second sealing plate, the injection hole is disposed on one side with respect to a center of the case in the second direction, and the first folded portion is disposed on the same side as the injection hole with respect to the center.
[8] The non-aqueous electrolyte secondary battery according to any one of [1] to [7], wherein the case main body is provided with a discharge valve that is preferentially fractured when pressure in the case becomes a predetermined value or more, the discharge valve is disposed on one side with respect to a center of the case in the second direction, and the first folded portion is disposed on the same side as the discharge valve with respect to the center.
[9] The non-aqueous electrolyte secondary battery according to any one of [1] to [8], wherein the case main body is formed to have a prismatic tubular shape by joining, at a joining portion, end sides of a plate-shaped member having been bent, the joining portion is disposed on one side with respect to a center of the case in the second direction, and the first folded portion is disposed opposite to the joining portion with respect to the center.
[10] A battery assembly comprising a plurality of non-aqueous electrolyte secondary batteries, the battery assembly being mounted on a vehicle, wherein each of the plurality of non-aqueous electrolyte secondary batteries includes an electrode assembly in which a first electrode and a second electrode are stacked with a separator being interposed between the first electrode and the second electrode, an electrode terminal connected to the first electrode or the second electrode, and a case that accommodates the electrode assembly and an electrolyte solution, wherein the case includes a case main body provided with a first opening at one end portion of the case main body in a first direction and a second opening at the other end portion of the case main body in the first direction, a first sealing plate that seals the first opening, and a second sealing plate that seals the second opening, the electrode terminal is attached to one of the first sealing plate and the second sealing plate, the first electrode is longer than the second electrode in a second direction orthogonal to the first direction, the first electrode and the second electrode are alternately stacked in a third direction orthogonal to each of the first direction and the second direction, the separator has a meandering shape including a first folded portion and a second folded portion provided at respective end portions of the first electrode and the second electrode in the second direction, and the first folded portion of the separator at the end portion of the first electrode is located below the first electrode when the battery assembly is mounted on the vehicle such that the second direction is oriented in an upward/downward direction.
[11] The battery assembly according to [10], further comprising a bus bar that connects the electrode terminals of the plurality of non-aqueous electrolyte secondary batteries, the bus bar is disposed on one side with respect to a center of the case in the second direction, and the first folded portion is disposed opposite to the bus bar with respect to the center.
[12] A vehicle comprising: a vehicle body; and a battery assembly including a plurality of non-aqueous electrolyte secondary batteries, the battery assembly being mounted on the vehicle body, wherein each of the plurality of non-aqueous electrolyte secondary batteries includes an electrode assembly in which a first electrode and a second electrode are stacked with a separator being interposed between the first electrode and the second electrode, an electrode terminal connected to the first electrode or the second electrode, and a case that accommodates the electrode assembly and an electrolyte solution, wherein the case includes a case main body provided with a first opening at one end portion of the case main body in a first direction and a second opening at the other end portion of the case main body in the first direction, a first sealing plate that seals the first opening, and a second sealing plate that seals the second opening, the electrode terminal is attached to one of the first sealing plate and the second sealing plate, the first electrode is longer than the second electrode in a second direction orthogonal to the first direction, the first electrode and the second electrode are alternately stacked in a third direction orthogonal to each of the first direction and the second direction, the separator has a meandering shape including a first folded portion and a second folded portion provided at respective end portions of the first electrode and the second electrode in the second direction, and the battery assembly is mounted on the vehicle such that the second direction is oriented in an upward/downward direction, and the first folded portion of the separator at the end portion of the first electrode is located below the first electrode.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a front view showing a configuration of a secondary battery according to one embodiment.
Fig. 2 is a diagram showing a state in which the secondary battery shown in Fig. 1 is viewed in a direction of arrow II.
Fig. 3 is a diagram showing a state in which the secondary battery shown in Fig. 1 is viewed in a direction of arrow III.
Fig. 4 is a diagram showing a state in which the secondary battery shown in Fig. 1 is viewed in a direction of arrow IV.
Fig. 5 is a diagram showing a state in which the secondary battery shown in Fig. 1 is viewed in a direction of arrow V.
Fig. 6 is a front cross sectional view of the secondary battery shown in Fig. 1.
Fig. 7 is a cross sectional view of a negative electrode plate.
Fig. 8 is a front view showing the negative electrode plate.
Fig. 9 is a cross sectional view of a positive electrode plate.
Fig. 10 is a front view showing the positive electrode plate.
Fig. 11 is a cross sectional view of the secondary battery shown in Fig. 1 along XI-XI.
Fig. 12 is a cross sectional view of the secondary battery shown in Fig. 1 along XII-XII.
Fig. 13 is a flowchart showing a method of manufacturing a secondary battery according to one embodiment.
Fig. 14 is a perspective view showing a state before two electrode assemblies included in the secondary battery according to one embodiment are overlapped with each other.
Fig. 15 is a cross sectional view of each of the electrode assemblies and the current collectors shown in Fig. 14 along XV-XV.
Fig. 16 is a perspective view showing a state of attaching a holder and a spacer to the electrode assembly.
Fig. 17 is a perspective view showing a state of attaching a sealing plate to the current collectors on the negative electrode side.
Fig. 18 is a cross sectional view of each of the electrode assemblies and the current collectors shown in Fig. 17 along XVIII-XVIII.
Fig. 19 is a perspective view showing a state of inserting the electrode assemblies into the case main body.
Fig. 20 is a perspective view showing a state of attaching a sealing plate to the current collectors on the positive electrode side.
Fig. 21 is a cross sectional view of each of the electrode assemblies and the current collectors shown in Fig. 20 along XXI-XXI.
Fig. 22 is a perspective view showing a configuration of the secondary battery.
Fig. 23 is a schematic diagram showing a shape of a separator folded in a meandering manner.
Fig. 24 is a schematic diagram showing an arrangement of the separator in the secondary battery according to one embodiment.
Fig. 25 is a schematic diagram showing an arrangement of a separator in a secondary battery according to a comparative example.
Fig. 26 is a first schematic diagram showing a state in which a liquid level of an excess of the electrolyte solution is different from that in the state shown in Fig. 24.
Fig. 27 is a second schematic diagram showing a state in which the liquid level of the excess of the electrolyte solution is different from that in the state shown in Fig. 24.
Fig. 28 is a third schematic diagram showing a state in which the liquid level of the excess of the electrolyte solution is different from that in the state shown in Fig. 24.
Fig. 29 is a fourth schematic diagram showing a state in which the liquid level of the excess of the electrolyte solution is different from that in the state shown in Fig. 24.
Fig. 30 is a schematic diagram showing a structure of the electrode assembly.
Fig. 31 is an enlarged view of a portion XXXI in Fig. 30.
Fig. 32 is a diagram showing a state in which a battery assembly including a plurality of secondary batteries is mounted on a vehicle.
Fig. 33 is a cross sectional view showing a configuration of a secondary battery according to a modification.

### DESCRIPTION OF THE PREFERRED EMBODIMENTS

Hereinafter, embodiments of the present technology will be described. It should be noted that the same or corresponding portions are denoted by the same reference characters, and may not be described repeatedly.

It should be noted that in the embodiments described below, when reference is made to number, amount, and the like, the scope of the present technology is not necessarily limited to the number, amount, and the like unless otherwise stated particularly. Further, in the embodiments described below, each component is not necessarily essential to the present technology unless otherwise stated particularly. Further, the present technology is not limited to one that necessarily exhibits all the functions and effects stated in the present embodiment.

It should be noted that in the present specification, the terms "comprise", "include", and "have" are open-end terms. That is, when a certain configuration is included, a configuration other than the foregoing configuration may or may not be included.

Also, in the present specification, when geometric terms and terms representing positional/directional relations are used, for example, when terms such as "parallel", "orthogonal", "obliquely at 45°", "coaxial", and "along" are used, these terms permit manufacturing errors or slight fluctuations. In the present specification, when terms representing relative positional relations such as "upper side" and "lower side" are used, each of these terms is used to indicate a relative positional relation in one state, and the relative positional relation may be reversed or turned at any angle in accordance with an installation direction of each mechanism (for example, the entire mechanism is reversed upside down).

In the present specification, the term "secondary battery" is not limited to a lithium ion battery, and may include other secondary batteries such as a nickel-metal hydride battery and a sodium-ion battery. In the present specification, the term "electrode" may collectively represent a positive electrode and a negative electrode.

It should be noted that in each of the figures, the X direction is defined as a long-side direction of the stacked surface of the stacked type electrode assembly included in the secondary battery. Further, the Y direction is defined as a short-side direction of the electrode assembly when viewed in the X direction, and the Z direction is defined as a long-side direction of the electrode assembly when viewed in the X direction. In order to facilitate understanding of the invention, the size of each configuration in the figures may be illustrated to be changed from its actual size.

In the specification of the present application, the first direction (X direction) may be referred to as a "width direction" of the secondary battery or the case main body, the second direction (Z direction) may be referred to as a "height direction" of the secondary battery or the case main body, and the third direction (Y direction) may be referred to as a "thickness direction" of the secondary battery or the case main body.

### (Overall Configuration of Battery)

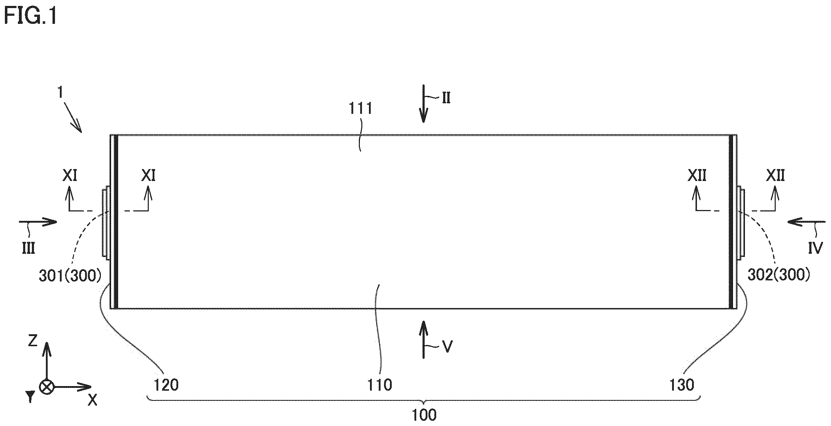

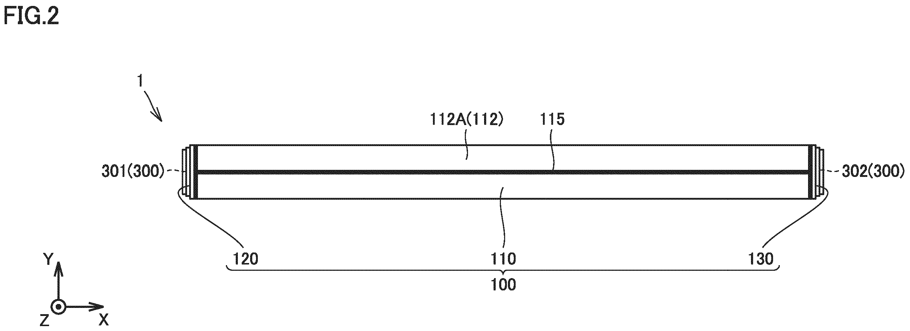

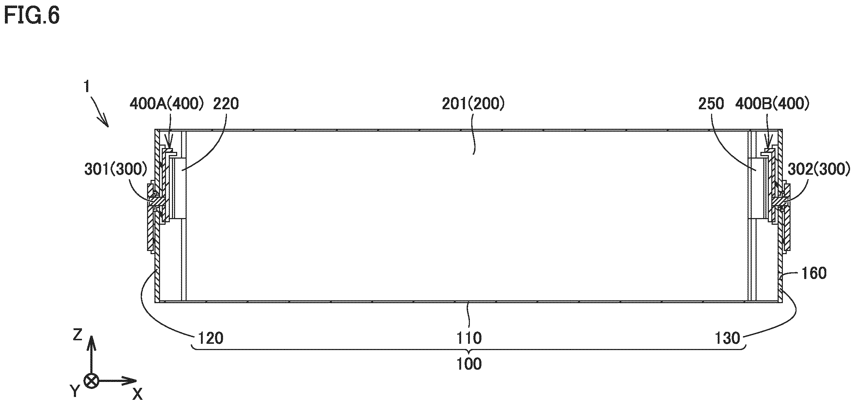

Fig. 1 is a front view of a secondary battery 1 according to one embodiment. Figs. 2 to 5 are diagrams showing states of secondary battery 1 (non-aqueous electrolyte secondary battery) shown in Fig. 1 when viewed in directions of arrows II, III, IV, and V respectively. Fig. 6 is a front cross sectional view of secondary battery 1 shown in Fig. 1.

Secondary battery 1 can be mounted on a battery electric vehicle (BEV), a plug-in hybrid electric vehicle (PHEV), a hybrid electric vehicle (HEV), or the like. It should be noted that the purpose of use of secondary battery 1 is not limited to the use on a vehicle.

As shown in Figs. 1 to 6, secondary battery 1 includes a case 100, an electrode assembly 200, electrode terminals 300, and current collectors 400. Case 100 includes a case main body 110, a sealing plate 120, and a sealing plate 130.

When forming a battery assembly including secondary battery 1, a plurality of secondary batteries 1 are stacked in the thickness direction of each of the plurality of secondary batteries 1. Secondary batteries 1 stacked may be restrained in the stacking direction (Y direction) by a restraint member to form a battery module, or the battery assembly may be directly supported by a side surface of a case of a battery pack without using the restraint member.

Case main body 110 is constituted of a member having a tubular shape, preferably, a prismatic tubular shape. Thus, secondary battery 1 having a prismatic shape is obtained. Case main body 110 is composed of a metal. Specifically, case main body 110 is composed of aluminum, an aluminum alloy, iron, an iron alloy, or the like.

As shown in Figs. 1 and 2, sealing plate 120 (first wall) and sealing plate 130 (second wall) are provided at respective end portions of the case main body. Case main body 110 can be formed to have a prismatic tubular shape in, for example, the following manner: end sides of a plate-shaped member having been bent are brought into abutment with each other (joining portion 115 illustrated in Fig. 2) and are joined together (for example, laser welding). Each of the corners of the "prismatic tubular shape" may have a shape with a curvature.

In the present embodiment, case main body 110 is formed to be longer in the width direction (X direction) of secondary battery 1 than in each of the thickness direction (Y direction) and the height direction (Z direction) of secondary battery 1. The size (width) of case main body 110 in the X direction is preferably about 30 cm or more. In this way, secondary battery 1 can be formed to have a relatively large size (high capacity). The size (height) of case main body 110 in the Z direction is preferably about 20 cm or less, more preferably about 15 cm or less, and further preferably about 10 cm or less. Thus, (low-height) secondary battery 1 having a relatively low height can be formed, thus resulting in improved ease of mounting on a vehicle, for example.

Case main body 110 includes a pair of first side surface portions 111 and a pair of second side surface portions 112. The pair of first side surface portions 111 constitute parts of the side surfaces of case 100. The pair of second side surface portions 112 constitute the bottom surface portion and upper surface portion of case 100. The pair of first side surface portions 111 and the pair of second side surface portions 112 are provided to intersect each other. The pair of first side surface portions 111 and the pair of second side surface portions 112 are connected at their respective end portions. Each of the pair of first side surface portions 111 desirably has an area larger than that of each of the pair of second side surface portions 112.

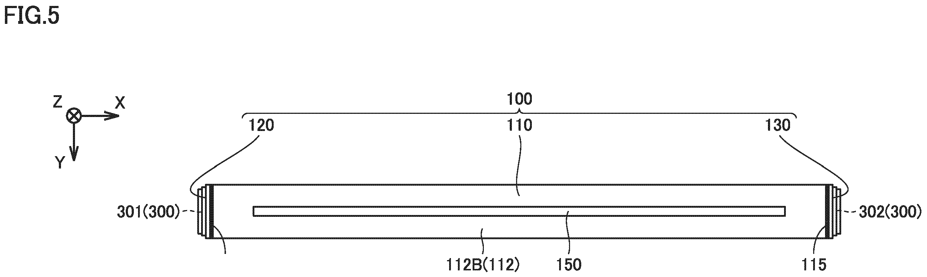

As shown in Fig. 5, a gas-discharge valve 150 is provided in one second side surface portion 112B of the pair of second side surface portions 112. Gas-discharge valve 150 extends in the width direction (X direction) of secondary battery 1. Gas-discharge valve 150 extends from the center of case main body 110 in the X direction to such an extent that gas-discharge valve 150 does not reach both ends of case main body 110 in the X direction. Gas-discharge valve 150 can be changed appropriately.

The thickness of the plate-shaped member in gas-discharge valve 150 is thinner than the thickness of the plate-shaped member of case main body 110 other than gas-discharge valve 150. Thus, when the pressure in case 100 becomes equal to or more than a predetermined value, gas-discharge valve 150 is fractured prior to the other portions of case main body 110, thereby discharging the gas in case 100 to the outside.

As shown in Fig. 2, joining portion 115 is formed at the other second side surface portion 112A of the pair of second side surface portions 112. Joining portion 115 extends in the width direction (X direction) of secondary battery 1. At joining portion 115, the end sides of the plate-shaped member of case main body 110 are joined to each other.

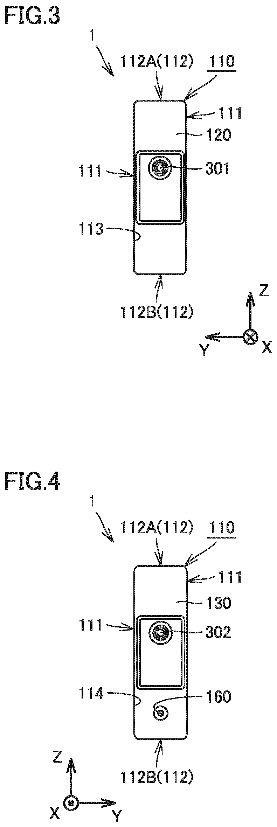

As shown in Fig. 3, an opening 113 (first opening) is provided at an end portion of case main body 110 on a first side in the first direction (X direction). Opening 113 is sealed by sealing plate 120. Joining portion 115 is formed at opening 113 so as to seal opening 113. Each of opening 113 and sealing plate 120 has a substantially rectangular shape in which the Y direction corresponds to its short-side direction and the Z direction corresponds to its long-side direction. It should be noted that the substantially rectangular shape includes a rectangular shape or a generally rectangular shape such as a rectangular shape having corners each with a curvature.

Sealing plate 120 (first sealing plate) is provided with a negative electrode terminal 301. The position of negative electrode terminal 301 can be appropriately changed.

As shown in Fig. 4, an opening 114 (second opening) is provided at an end portion of case main body 110 on a second side opposite to the first side in the first direction (X direction). That is, opening 114 is located at an end portion opposite to opening 113, and openings 113, 114 face each other. Opening 114 is sealed by sealing plate 130. Joining portion 115 is formed at opening 114 so as to seal opening 114. Each of opening 114 and sealing plate 130 has a substantially rectangular shape in which the Y direction corresponds to its short-side direction and the Z direction corresponds to its long-side direction.

Sealing plate 130 (second sealing plate) is provided with a positive electrode terminal 302 and an injection hole 160. The positions of positive electrode terminal 302 and injection hole 160 can be appropriately changed.

Each of sealing plate 120 and sealing plate 130 is composed of a metal. Specifically, each of sealing plate 120 and sealing plate 130 is composed of aluminum, an aluminum alloy, iron, an iron alloy, or the like.

Negative electrode terminal 301 (first electrode terminal) is electrically connected to a negative electrode of electrode assembly 200. Negative electrode terminal 301 is attached to sealing plate 120, i.e., case 100.

Positive electrode terminal 302 (second electrode terminal) is electrically connected to a positive electrode of electrode assembly 200. Positive electrode terminal 302 is attached to sealing plate 130, i.e., case 100.

Negative electrode terminal 301 is composed of a conductive material (more specifically, a metal), and can be composed of copper, a copper alloy, or the like, for example. A portion or layer composed of aluminum or an aluminum alloy may be provided at a portion of an outer surface of negative electrode terminal 301.

Positive electrode terminal 302 is composed of a conductive material (more specifically, a metal), and can be composed of aluminum, an aluminum alloy, or the like, for example.

Injection hole 160 is sealed by a sealing member (not shown). As the sealing member, for example, a blind rivet or another metal member can be used.

Electrode assembly 200 is an electrode assembly having a flat shape and having a below-described positive electrode plate and a below-described negative electrode plate stacked on each other. Specifically, electrode assembly 200 is a stacked type electrode assembly in which a plurality of positive electrode plates and a plurality of negative electrode plates are alternately stacked with a below-described separator 800 being interposed therebetween. Separator 800 can be constituted of, for example, a microporous membrane composed of polyolefin. When the electrode assembly is the stacked type electrode assembly including the plurality of positive electrode plates and the plurality of negative electrode plates, positive electrode tabs provided on the positive electrode plates may be stacked to form a positive electrode tab group, and negative electrode tabs provided on the negative electrode plates may be stacked to form a negative electrode tab group. It should be noted that electrode assembly 200 may include a plurality of stacked type electrode assemblies.

As shown in Fig. 6, case 100 accommodates electrode assembly 200. Fig. 6 illustrates a first electrode assembly 201 described below. First electrode assembly 201 is accommodated in case 100 such that the long-side direction thereof is parallel to the X direction.

Specifically, one or a plurality of the stacked type electrode assemblies and an electrolyte solution (electrolyte) (not shown) are accommodated inside a below-described insulating sheet 700 disposed in case 100. As the electrolyte solution (non-aqueous electrolyte solution), it is possible to use, for example, a solution obtained by dissolving LiPF₆ at a concentration of 1.2 mol/L in a non-aqueous solvent obtained by mixing ethylene carbonate (EC), ethyl methyl carbonate (EMC), and dimethyl carbonate (DMC) at a volume ratio (25°C) of 30:30:40.

First electrode assembly 201 includes a main body portion having a substantially rectangular shape, a negative electrode tab group 220 (first electrode tab group), and a positive electrode tab group 250 (second electrode tab group).

The main body portion is constituted of a below-described negative electrode plate 210 and a below-described positive electrode plate 240. Negative electrode tab group 220 is located at an end portion of first electrode assembly 201 on the first side with respect to the main body portion thereof in the first direction (X direction). The first side in the present embodiment is the sealing plate 120 side. Positive electrode tab group 250 is located at an end portion of first electrode assembly 201 on the second side with respect to the main body portion thereof in the first direction (X direction). The second side in the present embodiment is the sealing plate 130 side.

Each of negative electrode tab group 220 and positive electrode tab group 250 is formed to protrude from a central portion of electrode assembly 200 toward sealing plate 120 or sealing plate 130.

Current collectors 400 include a negative electrode current collector 400A and a positive electrode current collector 400B. Each of negative electrode current collector 400A and positive electrode current collector 400B is constituted of a plate-shaped member. Electrode assembly 200 is electrically connected to negative electrode terminal 301 and positive electrode terminal 302 through current collectors 400.

Negative electrode current collector 400A is disposed on sealing plate 120 with an insulating member composed of a resin being interposed therebetween. Negative electrode current collector 400A is electrically connected to negative electrode tab group 220 and negative electrode terminal 301. Negative electrode current collector 400A is composed of a conductive material (more specifically, a metal), and can be composed of copper, a copper alloy, or the like, for example. It should be noted that details of negative electrode current collector 400A will be described later.

Positive electrode current collector 400B is disposed on sealing plate 130 with an insulating member composed of a resin being interposed therebetween. Positive electrode current collector 400B is electrically connected to positive electrode tab group 250 and positive electrode terminal 302. Positive electrode current collector 400B is composed of a conductive material (more specifically, a metal), and can be composed of aluminum, an aluminum alloy, or the like, for example. It should be noted that positive electrode tab group 250 may be electrically connected to sealing plate 130 directly or via positive electrode current collector 400B. In this case, sealing plate 130 may serve as positive electrode terminal 302. Moreover, details of positive electrode current collector 400B will be described later.

### (Configuration of Electrode Assembly 200)

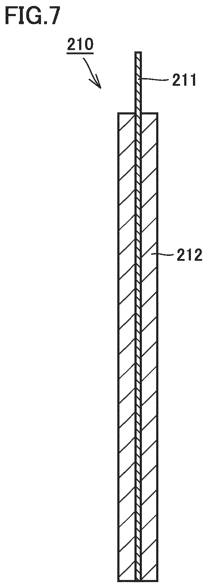

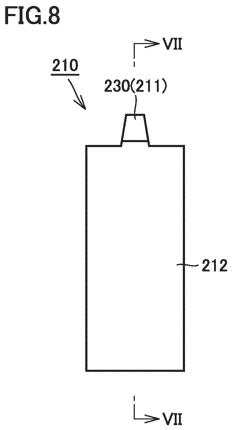

Fig. 7 is a cross sectional view of negative electrode plate 210 (cross sectional view along VII-VII in Fig. 8), and Fig. 8 is a front view showing negative electrode plate 210.

As shown in Fig. 8, a negative electrode tab 230 (first electrode tab) constituted of a negative electrode core body 211 is provided at one end portion, in the width direction, of negative electrode plate 210. When negative electrode plates 210 are stacked, a plurality of negative electrode tabs 230 are stacked to form negative electrode tab group 220. The length of each of the plurality of negative electrode tabs 230 in the plurality of negative electrode plates 210 in the protruding direction is appropriately adjusted in consideration of the state in which negative electrode tab group 220 is connected to negative electrode current collector 400A. It should be noted that the shape of negative electrode tab 230 is not limited to the one illustrated in Fig. 7.

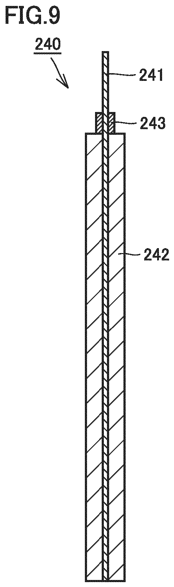

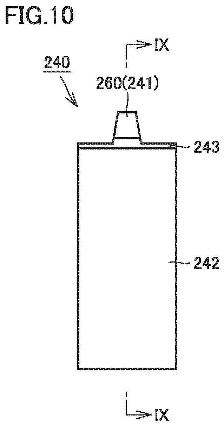

Fig. 9 is a cross sectional view of positive electrode plate 240 (cross sectional view along IX-IX in Fig. 10), and Fig. 10 is a front view showing positive electrode plate 240.

As shown in Fig. 10, a positive electrode tab 260 (second electrode tab) constituted of a positive electrode core body 241 is provided at one end portion, in the width direction, of positive electrode plate 240 formed. When positive electrode plates 240 are stacked, a plurality of positive electrode tabs 260 are stacked to form positive electrode tab group 250. The length of each of positive electrode tabs 260 in the plurality of positive electrode plates 240 in the protruding direction is appropriately adjusted in consideration of the state in which positive electrode tab group 250 is connected to positive electrode current collector 400B. It should be noted that the shape of positive electrode tab 260 is not limited to the one illustrated in Fig. 10.

A positive electrode protective layer 243 is provided at the root of positive electrode tab 260. Positive electrode protective layer 243 may not necessarily be provided at the root of positive electrode tab 260.

In a typical example, the thickness of (one) negative electrode tab 230 is smaller than the thickness of (one) positive electrode tab 260. In this case, the thickness of negative electrode tab group 220 is smaller than the thickness of positive electrode tab group 250.

### (Connection Structure between Electrode Assembly 200 and Current Collector 400)

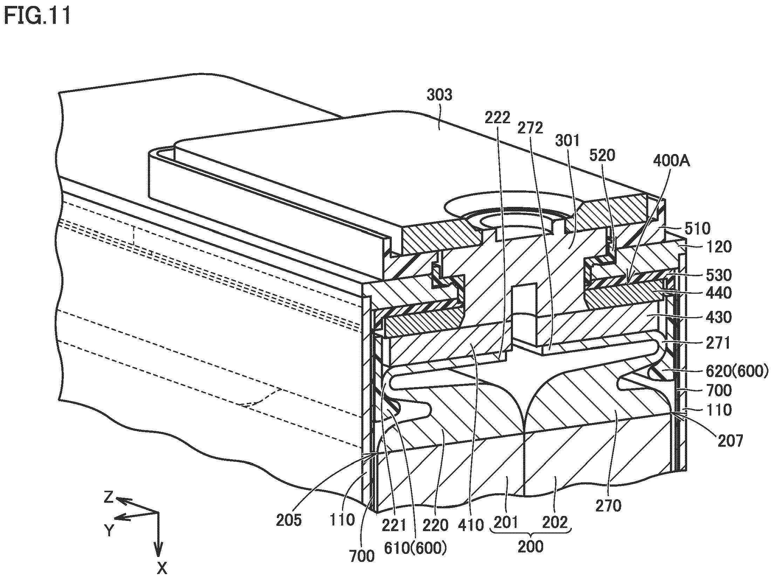

Fig. 11 is a cross sectional view of the secondary battery shown in Fig. 1 along XI-XI. As shown in Fig. 11, electrode assembly 200 includes first electrode assembly 201 and a second electrode assembly 202. Each of first electrode assembly 201 and second electrode assembly 202 includes a positive electrode (second electrode) and a negative electrode (first electrode). It should be noted that electrode assembly 200 may be constituted of three or more electrode assemblies.

Electrode assembly 200 is formed by overlapping first electrode assembly 201 and second electrode assembly 202 with each other. First electrode assembly 201 and second electrode assembly 202 are arranged side by side in the thickness direction (Y direction) of each of first electrode assembly 201 and second electrode assembly 202.

First electrode assembly 201 includes negative electrode tab group 220. Negative electrode tab group 220 is electrically connected to a current collector 410 (negative electrode current collector) at its first end portion 205 in the X direction. Second electrode assembly 202 includes a negative electrode tab group 270. Negative electrode tab group 270 is electrically connected to a current collector 430 (negative electrode current collector) at its third end portion 207 in the X direction.

Negative electrode tab group 220 has a curved portion 221 and a tip portion 222. Curved portion 221 is a portion at which negative electrode tab group 220 is curved on the side, on which the first electrode is connected, with respect to tip portion 222. Tip portion 222 is a portion located at an end portion of negative electrode tab group 220 on the side opposite to the side on which the first electrode is connected.

Negative electrode tab group 270 has a curved portion 271 and a tip portion 272. Curved portion 271 is a portion at which negative electrode tab group 270 is curved on the side, on which the first electrode is connected, with respect to tip portion 272. Tip portion 272 is a portion located at an end portion of negative electrode tab group 270 on the side opposite to the side on which the first electrode is connected.

Negative electrode tab group 220 and negative electrode tab group 270 are curved in opposite directions such that tip portions 222, 272 are close to each other. It should be noted that tip portions 222, 272 are separated from each other in the present embodiment; however, it is not limited to this configuration, and tip portions 222, 272 may be in contact with each other.

Negative electrode current collector 400A electrically connects negative electrode terminal 301 to negative electrode tab group 220 and negative electrode tab group 270. Negative electrode current collector 400A in the present embodiment is connected to negative electrode terminal 301 between electrode assembly 200 and sealing plate 120.

Negative electrode current collector 400A includes a current collector 410, a current collector 430, and a current collector 440.

Current collector 410 is a plate-shaped member. Current collector 410 has a long-side direction in the Z direction and a short-side direction in the Y direction. Current collector 430 is a plate-shaped member. Current collector 430 has a long-side direction in the Z direction and a short-side direction in the Y direction. Current collector 410 and current collector 430 are arranged side by side in parallel in the X direction. In this way, current collector 410 and current collector 430 are constituted of separate components.

Negative electrode tab group 220 is joined to current collector 410 at a joining location 411 described later. Negative electrode tab group 270 is joined to current collector 430 at a joining location 431 described later. Joining locations 411, 431 can be formed by, for example, ultrasonic welding, resistance welding, laser welding, swaging, or the like. In the present embodiment, negative electrode tab group 220 and current collector 410 are joined by ultrasonic joining, and negative electrode tab group 270 and current collector 430 are joined by ultrasonic joining, for example.

Current collector 440 is j oined to each of current collector 410 and current collector 430 at a joining location (not shown) located at its end portion in the Z direction. Current collector 440 is connected to negative electrode terminal 301. The connection between current collector 440 and negative electrode terminal 301 can be formed by swaging and/or welding, for example.

Negative electrode terminal 301 is provided to be exposed to the outside of sealing plate 120 and reach current collector 440 of negative electrode current collector 400A provided on the inner surface side of sealing plate 120. Negative electrode terminal 301 is connected to a plate-shaped member 303.

Plate-shaped member 303 is located on the outer side with respect to sealing plate 120. Plate-shaped member 303 is disposed along sealing plate 120. Plate-shaped member 303 has electric conductivity. Plate-shaped member 303 is disposed to secure an area of connection with a bus bar or the like that electrically connects secondary battery 1 and another secondary battery adjacent thereto. The connection between negative electrode terminal 301 and plate-shaped member 303 can be formed by, for example, laser welding or the like.

An insulating member 510 is disposed between plate-shaped member 303 and sealing plate 120. An insulating member 520 is disposed between negative electrode terminal 301 and sealing plate 120. An insulating member 530 is disposed between current collector 440 and sealing plate 120.

It should be noted that negative electrode terminal 301 may be electrically connected to sealing plate 120. Further, sealing plate 120 may function as negative electrode terminal 301.

A spacer 600 is disposed between sealing plate 120 and the main body portion (negative electrode tab group 220 is not included) of electrode assembly 200. Spacer 600 is composed of a resin member having an insulating property. Spacer 600 includes a first component 610 and a second component 620. First component 610 and second component 620 are engaged with each other at engagement portions (not shown) at both ends in the Z direction.

Each of first component 610 and second component 620 protrudes in the Y direction at its end portion side on the electrode assembly 200 side in the X direction. Thus, spacer 600 functions as a guide to facilitate curving of curved portions 221, 271 when forming curved portions 221, 271.

Insulating sheet 700 (electrode assembly holder) composed of a resin is disposed between electrode assembly 200 and case main body 110. Insulating sheet 700 may be composed of, for example, a resin. More specifically, the material of insulating sheet 700 is, for example, polypropylene (PP), polyethylene terephthalate (PET), polyphenylene sulfide (PPS), polyimide (PI), or polyolefin (PO).

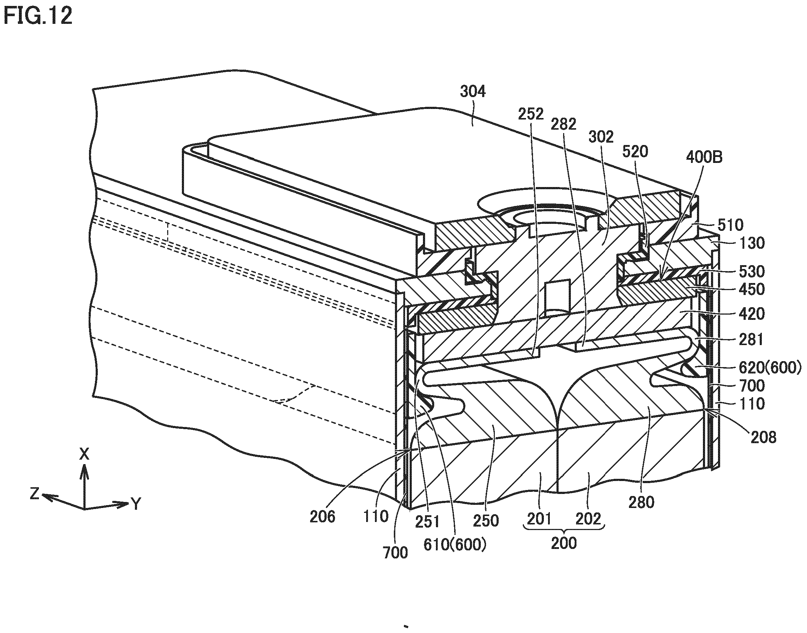

Fig. 12 is a cross sectional view of the secondary battery shown in Fig. 1 along XII-XII. The connection structure between electrode assembly 200 and current collector 400 on the positive electrode side of secondary battery 1 according to the present embodiment is different from that of the configuration on the negative electrode side in the following point: a portion corresponding to current collector 410 and current collector 430 on the negative electrode side is constituted of a single component (current collector 420).

First electrode assembly 201 includes positive electrode tab group 250. Positive electrode tab group 250 is electrically connected to a current collector 420 (positive electrode current collector) at its second end portion 206 in the X direction. Second electrode assembly 202 includes a positive electrode tab group 280. Positive electrode tab group 280 is electrically connected to current collector 420 (positive electrode current collector) at its fourth end portion 208 in the X direction.

Positive electrode tab group 250 has a curved portion 251 and a tip portion 252. Curved portion 251 is a portion at which positive electrode tab group 250 is curved on the side, on which the second electrode is connected, with respect to tip portion 252. Tip portion 252 is a portion located at an end portion of positive electrode tab group 250 on the side opposite to the side on which the second electrode is connected.

Positive electrode tab group 280 has a curved portion 281 and a tip portion 282. Curved portion 281 is a portion at which positive electrode tab group 280 is curved on the side, on which the second electrode is connected, with respect to tip portion 282. Tip portion 282 is a portion located at an end portion of positive electrode tab group 280 on the side opposite to the side on which the second electrode is connected.

Positive electrode tab group 250 and positive electrode tab group 280 are curved in opposite directions such that tip portions 252, 282 are close to each other. It should be noted that tip portions 252, 272 are separated from each other in the present embodiment; however, it is not limited to this configuration, and tip portions 252, 282 may be in contact with each other.

Positive electrode current collector 400B electrically connects positive electrode terminal 302 to positive electrode tab group 250 and positive electrode tab group 280. Positive electrode current collector 400B in the present embodiment is connected to positive electrode terminal 302 between electrode assembly 200 and sealing plate 130.

Positive electrode current collector 400B includes a current collector 420 and a current collector 450.

Current collector 420 is a plate-shaped member. Current collector 420 has a long-side direction in the Z direction and a short-side direction in the Y direction. Current collector 420 is constituted of a single component in one piece.

Positive electrode tab group 250 and positive electrode tab group 280 are joined, at below-described joining locations 421, to current collector 420 constituted of the single component. Each of joining locations 421 may be formed by ultrasonic welding, resistance welding, laser welding, swaging, or the like, for example. In the present embodiment, positive electrode tab group 250 and positive electrode tab group 280 are joined to current collector 420 by ultrasonic joining, for example.

Current collector 450 is joined to current collector 420 at a joining location (not shown) located at its end portion in the Z direction. Current collector 450 is connected to positive electrode terminal 302. The connection between current collector 450 and positive electrode terminal 302 may be formed by swaging and/or welding, for example.

Positive electrode terminal 302 is provided to be exposed to the outside of sealing plate 130 and reach current collector 450 of positive electrode current collector 400B provided on the inner surface side of sealing plate 130. Positive electrode terminal 302 is connected to a plate-shaped member 304.

Plate-shaped member 304 is located on the outer side with respect to sealing plate 130. Plate-shaped member 304 is disposed along sealing plate 130. Plate-shaped member 304 has electric conductivity. Plate-shaped member 304 is disposed to secure an area of connection with a bus bar or the like that electrically connects secondary battery 1 and another secondary battery adjacent thereto. The connection between positive electrode terminal 302 and plate-shaped member 304 may be formed by, for example, laser welding or the like.

An insulating member 510 is disposed between plate-shaped member 304 and sealing plate 130. An insulating member 520 is disposed between positive electrode terminal 302 and sealing plate 130. An insulating member 530 is disposed between current collector 450 and sealing plate 130.

It should be noted that positive electrode terminal 302 may be electrically connected to sealing plate 130. Further, sealing plate 130 may function as positive electrode terminal 302.

A spacer 600 is disposed between sealing plate 130 and the main body portion (positive electrode tab groups 250, 280 are not included) of electrode assembly 200. Spacer 600 is composed of a resin member having an insulating property. Spacer 600 includes a first component 610 and a second component 620. First component 610 and second component 620 are engaged with each other at engagement portions (not shown) at both ends in the Z direction.

Each of first component 610 and second component 620 protrudes in the Y direction at its end portion side on the electrode assembly 200 side in the X direction. Thus, spacer 600 functions as a guide to facilitate curving of curved portions 251, 281 when forming curved portions 251, 281.

Insulating sheet 700 (electrode assembly holder) composed of a resin is disposed between electrode assembly 200 and case main body 110.

### (Manufacturing Process for Secondary Battery 1)

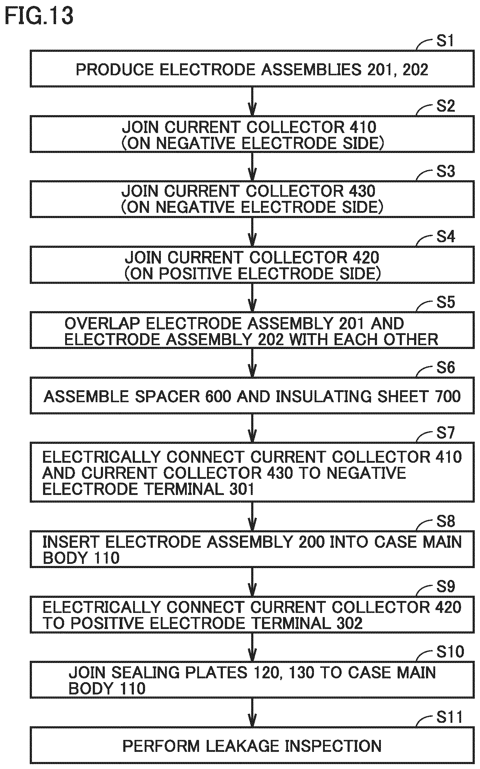

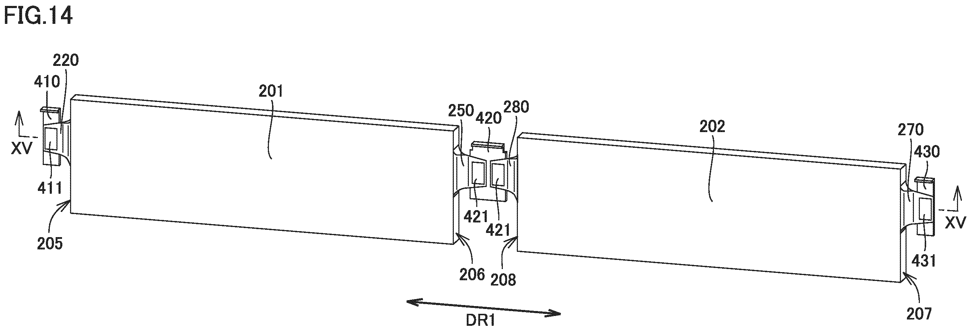

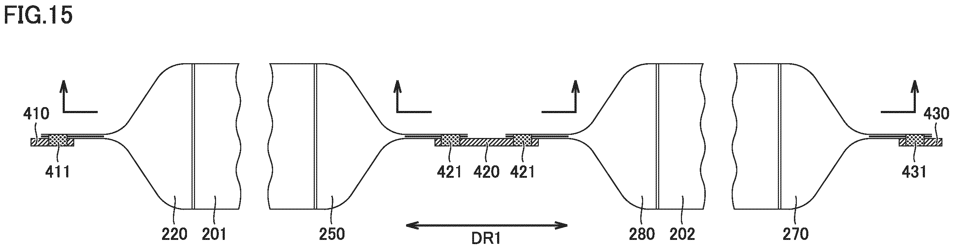

Hereinafter, a method of manufacturing the secondary battery according to the present embodiment will be described. Fig. 13 is a flowchart showing the method of manufacturing the secondary battery according to the present embodiment. Fig. 14 is a perspective view showing a state before the two electrode assemblies included in the secondary battery according to the present embodiment are overlapped with each other. Fig. 15 is a cross sectional view of each of the electrode assemblies and the current collectors shown in Fig. 14 along XV-XV.

As shown in Fig. 13, in the method of manufacturing the secondary battery according to the present embodiment, first, first electrode assembly 201 and second electrode assembly 202 are produced (step S1). Parts of the tips of negative electrode tab group 220, positive electrode tab group 250, negative electrode tab group 270, and positive electrode tab group 280 are cut such that they have the same tip length when bundled.

As shown in Figs. 13 to 15, after producing first electrode assembly 201 and second electrode assembly 202, negative electrode tab group 220 is joined to current collector 410 (step S2). Negative electrode tab group 220 is joined to current collector 410 at joining location 411. Next, negative electrode tab group 270 is joined to current collector 430 (step S3). Negative electrode tab group 270 is joined to current collector 430 at joining location 431.

Next, first electrode assembly 201, current collector 420, and second electrode assembly 202 are disposed side by side in this order in the first direction (DR1 direction). Positive electrode tab group 250 is disposed on one side with respect to current collector 420 in the first direction (DR1 direction). Positive electrode tab group 250 and positive electrode tab group 280 are joined to current collector 420 with positive electrode tab group 280 being disposed on the other side with respect to current collector 420 in the first direction (DR1 direction) (step S4). Positive electrode tab group 250 and positive electrode tab group 280 are joined to current collector 420 at joining locations 421.

In the height direction of each of first electrode assembly 201 and second electrode assembly 202, each of current collector 410, current collector 420 and current collector 430 is disposed on one side with respect to the center of each of first electrode assembly 201 and second electrode assembly 202. Thus, each of the current collectors can be formed to be short, thereby reducing the size of the current collector.

It should be noted that each of current collector 410, current collector 420, and current collector 430 is not limited to this configuration. In the height direction of each of first electrode assembly 201 and second electrode assembly 202, each of current collector 410, current collector 420, and current collector 430 may be disposed at the center of a corresponding one of first electrode assembly 201 and second electrode assembly 202. In this case, in the height direction of each of first electrode assembly 201 and second electrode assembly 202, each of negative electrode tab group 220, positive electrode tab group 250, negative electrode tab group 270, and positive electrode tab group 280 is disposed at the center of a corresponding one of first electrode assembly 201 and second electrode assembly 202 so as to correspond to a corresponding one of current collector 410, current collector 420, and current collector 430.

Further, the order of the steps of joining current collector 410, current collector 420 and current collector 430 to first electrode assembly 201 and second electrode assembly 202 is not limited to the one described above, and the order may be changed. Each of the respective steps of joining current collector 410 and current collector 430 to first electrode assembly 201 and second electrode assembly 202 is preferably performed before the below-described step of overlapping first electrode assembly 201 and second electrode assembly 202 with each other, and is preferably performed before the step of joining current collector 420 to first electrode assembly 201 and second electrode assembly 202.

Next, after joining positive electrode tab group 250 and positive electrode tab group 280 to current collector 420, positive electrode tab group 250 and positive electrode tab group 280 are bent in the thickness direction (direction orthogonal to the DR1 direction in Figs. 14 and 15) of each of first electrode assembly 201 and second electrode assembly 202, thereby overlapping first electrode assembly 201 and second electrode assembly 202 with each other (step S5). That is, first electrode assembly 201 and second electrode assembly 202 are collected together.

Regarding the expression "overlapping the first electrode assembly and the second electrode assembly with each other", the first electrode assembly and the second electrode assembly may be overlapped with each other directly, or another member may be disposed between the first electrode assembly and the second electrode assembly. Further, the first electrode assembly and the second electrode assembly may or may not be fixed by a tape or the like. Further, the first electrode assembly, the current collector, and the second electrode assembly may not be disposed on a straight line in the first direction (DR1 direction), and the first electrode assembly or the second electrode assembly may be inclined with respect to the current collector in the first direction (DR1 direction).

Positive electrode tab group 250 and positive electrode tab group 280 are folded such that tip portions thereof face each other. Similarly, negative electrode tab group 220 and negative electrode tab group 270 are also folded such that tip portions thereof face each other.

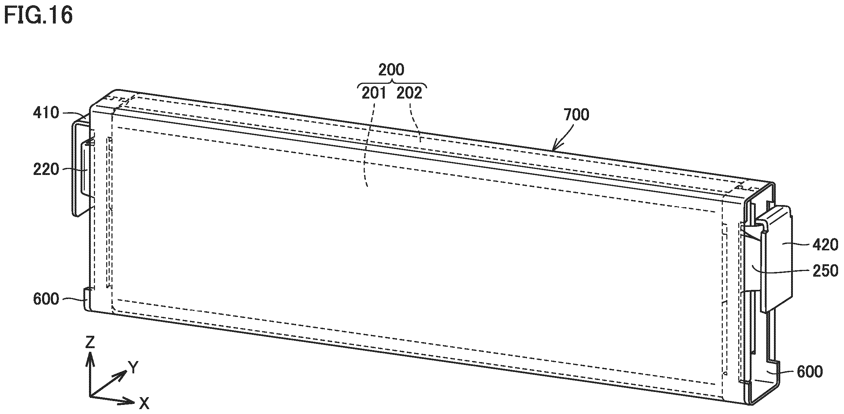

Each of Figs. 13 and 16 is a perspective view showing a state of attaching the holder and the spacer to the electrode assembly. As shown in Fig. 16, next, spacer 600 and insulating sheet 700 are assembled to electrode assembly 200 (step S6).

It should be noted that insulating sheet 700 does not necessarily need to cover a whole of the surfaces of electrode assembly 200. Insulating sheet 700 preferably covers an area of about 50% or more, more preferably about 70% or more, of the outer surfaces of the electrode assembly. Insulating sheet 700 preferably covers a whole of at least four surfaces of the six surfaces of electrode assembly 200 having a substantially rectangular parallelepiped shape (flat shape) other than the two surfaces thereof on which negative electrode tab group 220 and positive electrode tab group 250 are formed respectively.

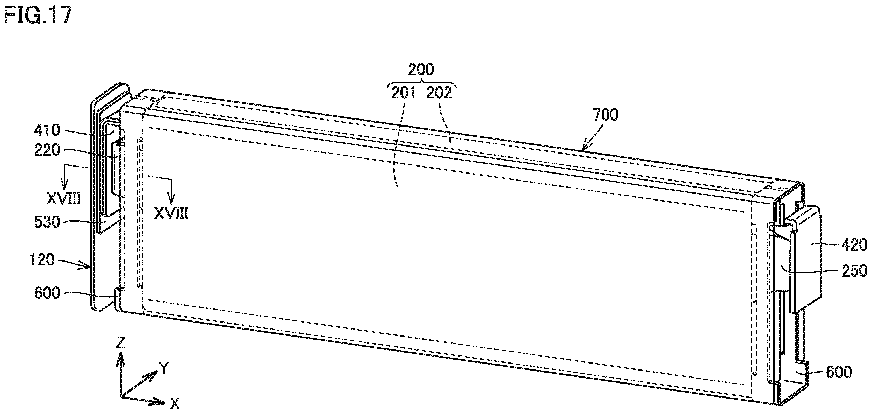

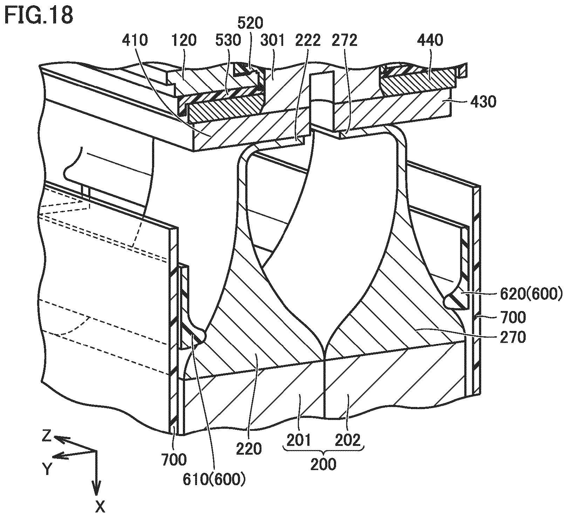

Fig. 17 is a perspective view showing a state of attaching sealing plate 120 to the current collectors on the negative electrode side. Fig. 18 is a cross sectional view of each of the electrode assemblies and the current collectors shown in Fig. 17 along XVIII-XVIII.

As shown in Figs. 13, 17, and 18, current collector 410 and current collector 430 are electrically connected to negative electrode terminal 301 via current collector 440 after joining negative electrode tab group 220 to current collector 410, joining negative electrode tab group 270 to current collector 430, and overlapping first electrode assembly 201 and second electrode assembly 202 with each other (step S7). It should be noted that step S7 can be performed before step S6.

Specifically, negative electrode tab group 220 and negative electrode tab group 270 are folded such that tip portions 222, 272 face each other.

Each of negative electrode terminal 301 and current collector 440 is attached to sealing plate 120 with an insulating member being interposed therebetween. Current collector 440 is brought into abutment with current collector 410 and current collector 430 in the X direction. It should be noted that the connecting of plate-shaped member 303 to negative electrode terminal 301 may be performed at any timing. Current collector 440 is joined to current collector 410 and current collector 430 by laser welding from between sealing plate 120 and insulating sheet 700.

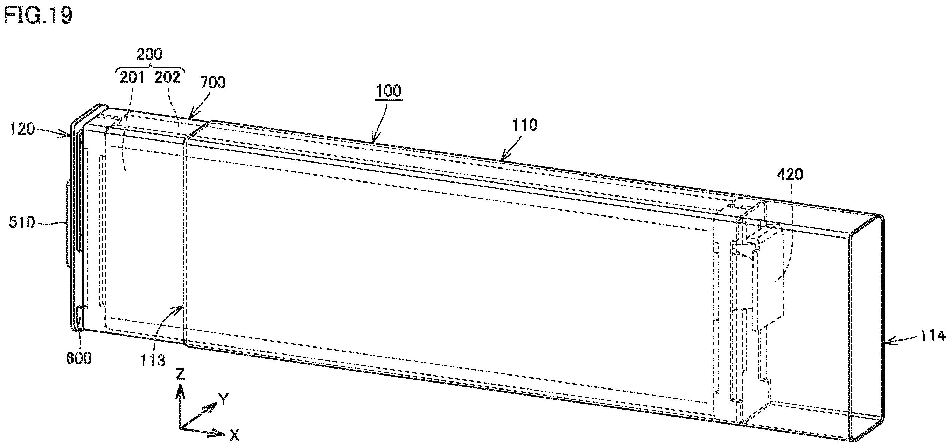

Fig. 19 is a perspective view showing a state of inserting the electrode assemblies into the case main body. As shown in Figs. 13 and 19, next, after overlapping first electrode assembly 201 and second electrode assembly 202 with each other, first electrode assembly 201 and second electrode assembly 202 are inserted into case main body 110 via opening 113 with the current collector 420 side being inserted first (step S8).

Negative electrode tab group 220 and negative electrode tab group 270 are curved by bringing sealing plate 120 close to the main body portion of electrode assembly 200 (first electrode assembly 201 and second electrode assembly 202). It should be noted that sealing plate 120 and case main body 110 are preferably brought close to each other by bringing sealing plate 120 close to the main body portion of electrode assembly 200 disposed in case main body 110. As shown in Fig. 11, negative electrode tab group 220 and negative electrode tab group 270 are curved along the shape of spacer 600 such that the folded portions of curved portions 221, 271 are close to case main body 110 in the Y direction.

After bringing sealing plate 120 into abutment with case main body 110, sealing plate 120 is temporarily joined to case main body 110. By the temporary joining, sealing plate 120 is partially joined to opening 113 of case main body 110. Thus, sealing plate 120 is positioned with respect to case main body 110.

When inserting electrode assembly 200 into case main body 110, electrode assembly 200 may be pulled from the current collector 420 side, or may be pushed from each of the current collector 410 side and the current collector 430 side. When electrode assembly 200 is pressed from each of the current collector 410 side and the current collector 430 side, negative electrode tab group 220 and negative electrode tab group 270 can be curved at the same time.

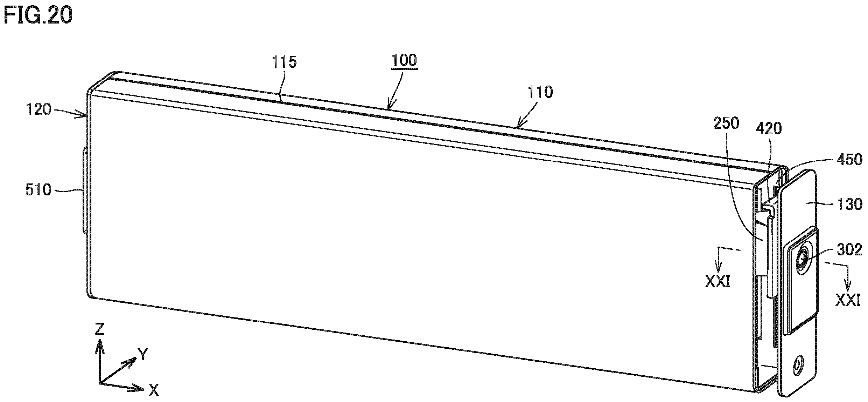

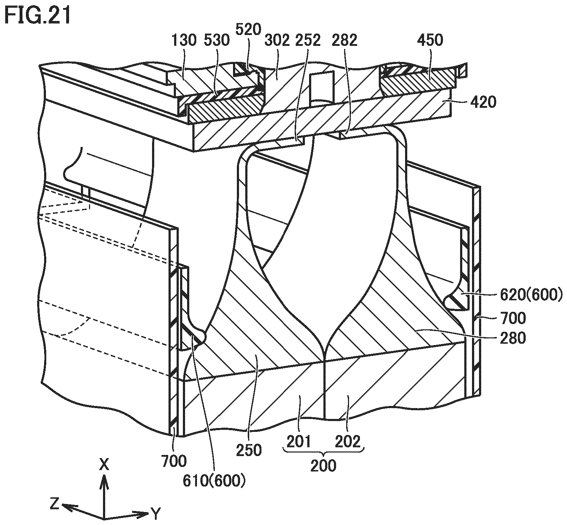

Fig. 20 is a perspective view showing a state of attaching sealing plate 130 to the current collectors on the positive electrode side. Fig. 21 is a cross sectional view of each of the electrode assemblies and the current collectors shown in Fig. 20 along XXI-XXI. It should be noted that in Fig. 21, case main body 110 is not shown.

As shown in Figs. 13, 20 and 21, current collector 420 is electrically connected to positive electrode terminal 302 after inserting first electrode assembly 201 and second electrode assembly 202 into case main body 110 (step S9).

Specifically, each of positive electrode terminal 302 and current collector 450 is attached to sealing plate 130 with an insulating member being interposed therebetween. After inserting first electrode assembly 201 and second electrode assembly 202 into case main body 110, current collector 450 is brought into abutment, in the X direction, with current collector 420 protruding from opening 114. It should be noted that the connecting of plate-shaped portion 304 to positive electrode terminal 302 may be performed at any timing.

As shown in Fig. 21, positive electrode tab group 250 and positive electrode tab group 280 connected to current collector 420 are folded such that tip portions 252, 282 face each other. From the state shown in Fig. 21, sealing plate 130 is brought into abutment with case main body 110. On this occasion, positive electrode tab group 250 and positive electrode tab group 280 are curved by bringing sealing plate 130 and the main body portion of electrode assembly 200 close to each other. As shown in Fig. 12, positive electrode tab group 250 and positive electrode tab group 280 are curved along the shape of spacer 600 such that the folded portions of curved portions 251, 281 are close to case main body 110 in the Y direction.

After sealing plate 130 is brought into abutment with case main body 110, sealing plate 130 is temporarily welded to case main body 110. By the temporary joining, sealing plate 130 is partially joined to opening 114 of case main body 110. Thus, sealing plate 130 is positioned with respect to case main body 110.

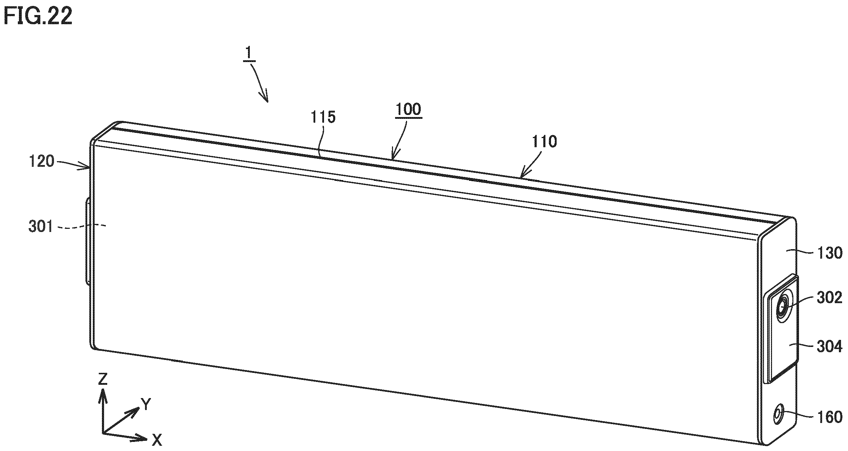

Fig. 22 is a perspective view showing the configuration of secondary battery 1. As shown in Figs. 13 and 22, next, sealing plate 120 and sealing plate 130 are joined to case main body 110 (step S10). Sealing plate 120 seals opening 113 of case main body 110, and sealing plate 130 seals opening 114 of case main body 110. Thus, first electrode assembly 201 and second electrode assembly 202 are accommodated in case 100.

After the above-described steps, an inspection such as a leakage inspection is performed (step S11). After the leakage inspection, secondary battery 1 is dried to remove moisture in case 100. Then, the electrolyte solution is injected into case 100 through injection hole 160. When injecting the electrolyte solution, case 100 is inclined with sealing plate 130 facing upward and sealing plate 120 facing downward, thereby injecting the electrolyte solution into case 100 via injection hole 160 of sealing plate 130. Thereafter, charging is performed to result in release of gas. For performing the charging to result in release of gas, injection hole 160 may be temporarily sealed. Thereafter, injection hole 160 is sealed, thereby completing secondary battery 1.

It should be noted that the order of the step of inserting electrode assembly 200 and the step of connecting the current collectors is not limited to the above-described example. For example, after only a portion of electrode assembly 200 is inserted into case main body 110 with the end portion of negative electrode active material layer 212 on the opening 113 side being disposed outside case main body 110 (first step), negative electrode terminal 301 (first electrode terminal) provided on sealing plate 120 (first sealing plate) and negative electrode tab groups 220, 270 (first electrode tab) may be electrically connected to each other, and then electrode assembly 200 may be inserted into case main body 110 until the end portion of negative electrode active material layer 212 on the opening 113 side is disposed inside case main body 110 (second step). That is, negative electrode terminal 301 and electrode assembly 200 can be electrically connected to each other during the step of inserting electrode assembly 200 into case main body 110.

In the present embodiment, since first electrode assembly 201 is provided with negative electrode tab group 220 and positive electrode tab group 250 and second electrode assembly 202 is provided with negative electrode tab group 270 and positive electrode tab group 280, first electrode assembly 201 and second electrode assembly 202 can be configured to have separate electrode tabs. With this configuration, the electrode tabs can be shortened as compared with a case where one collective electrode tab is formed by first electrode assembly 201 and second electrode assembly 202 and the electrode tab is bent. As a result, the occupied volume of the electrode tabs can be reduced, thereby improving the energy density of secondary battery 1. Further, in the configuration in which the separate electrode tabs are respectively provided for first electrode assembly 201 and second electrode assembly 202, the electrode tabs are readily bent and the electrode tabs and the current collectors can be therefore readily joined as compared with the case where one collective electrode tab is formed by first electrode assembly 201 and second electrode assembly 202, with the result that the secondary battery can be stably manufactured. In particular, since secondary battery 1 can be stably manufactured, reliability of the connection portion between each of the electrode tabs and each of the current collectors can be increased.

### (Shape and Arrangement of Separator 800)

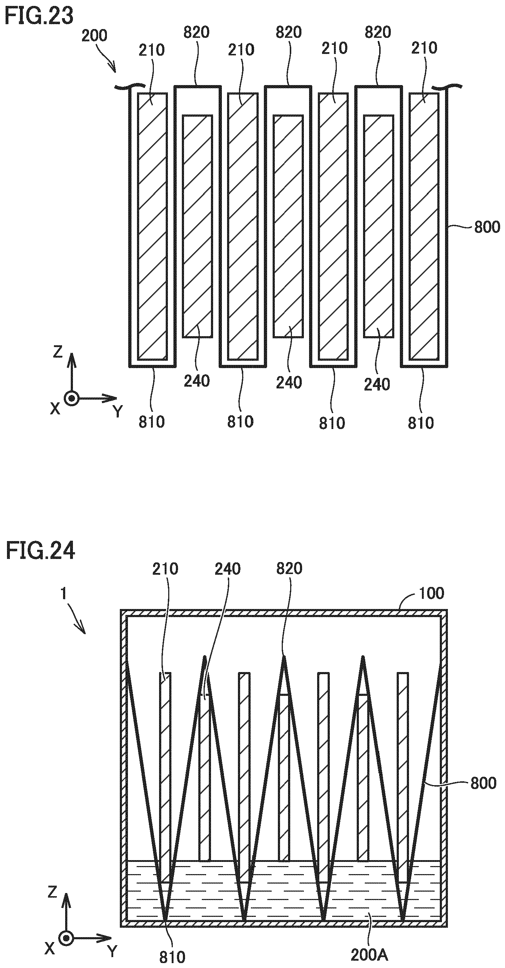

Fig. 23 is a schematic diagram showing shapes of each negative electrode plate 210, each positive electrode plate 240, and separator 800.

As shown in Fig. 23, negative electrode plate 210 (first electrode) is formed to be longer than positive electrode plate 240 (second electrode) in the Z direction (second direction). Negative electrode plates 210 and positive electrode plates 240 are alternately stacked in the Y direction (third direction).

Separator 800 has a meandering shape including a plurality of folded portions 810, 820. Folded portions 810 are provided at respective end portions of negative electrode plates 210 in the Z direction, and folded portions 820 are provided at respective end portions of positive electrode plates 240 in the Z direction. The substantially U shape of each of folded portions 810, 820 (folded-back portions) shown in Fig. 23 is just exemplary, and the scope of the present technology is not limited thereto. For example, the shape of each of folded portions 810, 820 (folded-back portions) may be a substantially V shape as shown in Fig. 24 described below.

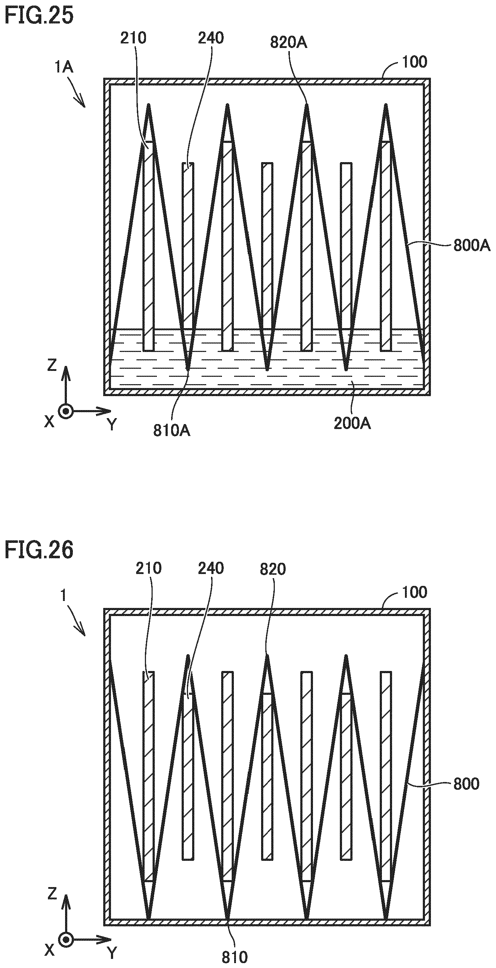

Fig. 24 is a schematic diagram showing an arrangement of separator 800 in secondary battery 1 according to the present embodiment. Fig. 25 is a schematic diagram showing an arrangement of a separator 800A in a secondary battery 1A according to a comparative example.

Each of secondary batteries 1, 1A is mounted on a vehicle such that the Z direction is oriented in an upward/downward direction (substantially vertical direction), more specifically, such that the +Z side is located on the upper side. On this occasion, in secondary battery 1 shown in Fig. 24, folded portion 810 (first folded portion) is located below negative electrode plate 210 (first electrode), and folded portion 820 (second folded portion) is located above positive electrode plate 240 (second electrode). On the other hand, in secondary battery 1A shown in Fig. 25, folded portion 820A is located above negative electrode plate 210, and folded portion 810A is located below positive electrode plate 240.

As described above, since negative electrode plate 210 is formed to be longer than positive electrode plate 240 in the Z direction, a negative electrode active material is likely to fall from negative electrode active material layer 212 of negative electrode plate 210. Further, generally, binding force of negative electrode active material layer 212 to negative electrode core body 211 is weaker than binding force of positive electrode active material layer 242 to positive electrode core body 241 and the negative electrode active material (particularly graphite) tends to be detached more readily.

Negative electrode active material layer 212 can include a binder (such as SBR or CMC) and a conductive member (such as a carbon material) in addition to the negative electrode active material. As the negative electrode active material, a carbon material such as graphite or a silicon material such as SiO or SiC can be used. The negative electrode active material may be a mixture of a plurality of types of materials.

As shown in Figs. 24 and 25, an excess of an electrolyte solution 200A is stored in the bottom portion of case 100. In a state in which negative electrode active material layer 212 is immersed in the excess of electrolyte solution 200A, the active material tends to be detached more readily.

When a conductive active material detached and having fallen from an electrode plate floats in electrolyte solution 200A to move to an opposite electrode, self-discharge or short circuit can occur inside case 100.

On the other hand, in secondary battery 1 (Fig. 24) according to the present embodiment, since folded portion 810 of separator 800 is disposed below negative electrode plate 210 from which the active material is more likely to fall, the active material having fallen from negative electrode active material layer 212 is less likely to float in case 100 to result in a reduced possibility of the active material moving to positive electrode plate 240 as compared with secondary battery 1A (Fig. 25) according to the comparative example. As a result, secondary battery 1 having high reliability is provided in which occurrence of self-discharge and short-circuit failure is suppressed.

### (Liquid Level of Excess of Electrolyte Solution 200A)

Each of Figs. 26 to 29 is a schematic diagram showing a state in which the liquid level of the excess of electrolyte solution 200A is different from that in the state shown in Fig. 24.

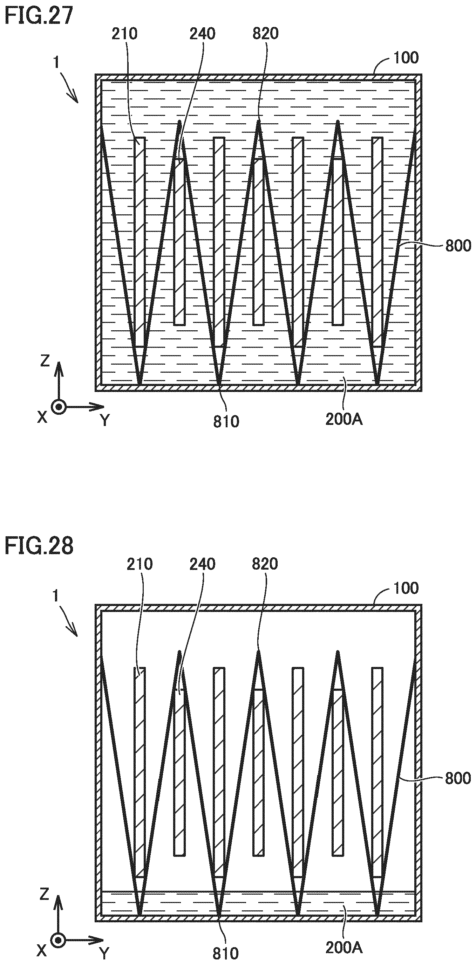

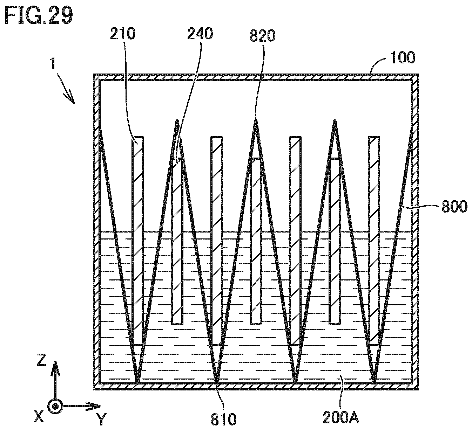

Fig. 26 shows a state before injecting electrolyte solution 200A into case 100 after electrode assembly 200 is accommodated in case 100, Fig. 27 shows a state immediately after injecting electrolyte solution 200A into case 100, Fig. 28 shows a state in which electrode assembly 200 is impregnated with electrolyte solution 200A having been injected, and Fig. 29 shows a state in which secondary battery 1 is charged or discharged.

As shown in Figs. 24 and 26 to 29, in each state, the liquid level of the excess of electrolyte solution 200A is changed. However, in each of the use states of secondary battery 1 (Figs. 24 and 27 to 29), electrolyte solution 200A accumulated below negative electrode plate 210 is interposed between portions of separator 800 folded in the meandering manner. Therefore, even when the negative electrode active material detached from negative electrode plate 210 floats in electrolyte solution 200A, the negative electrode active material is suppressed from reaching positive electrode plate 240, which is an opposite electrode. In this way, secondary battery 1 having high reliability is provided.

### (Structure of End Portion of Electrode Assembly 200)

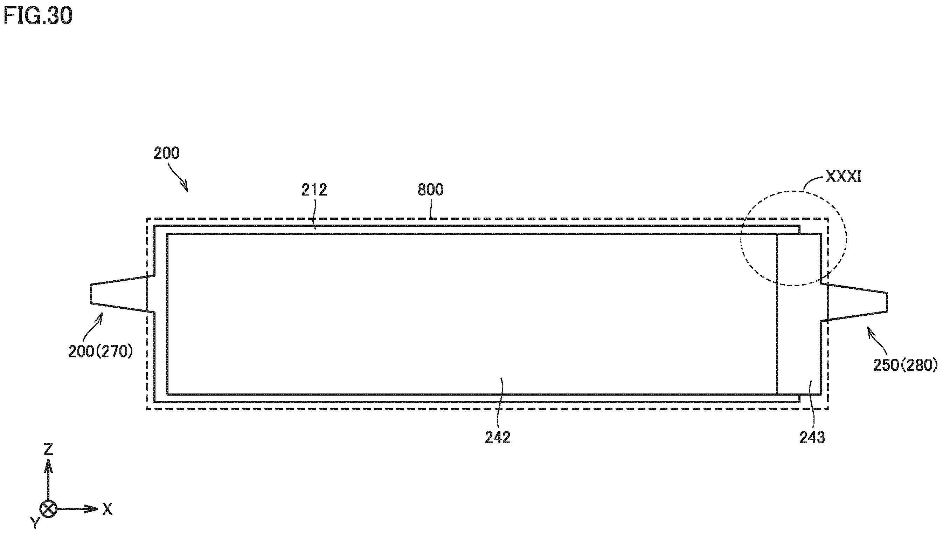

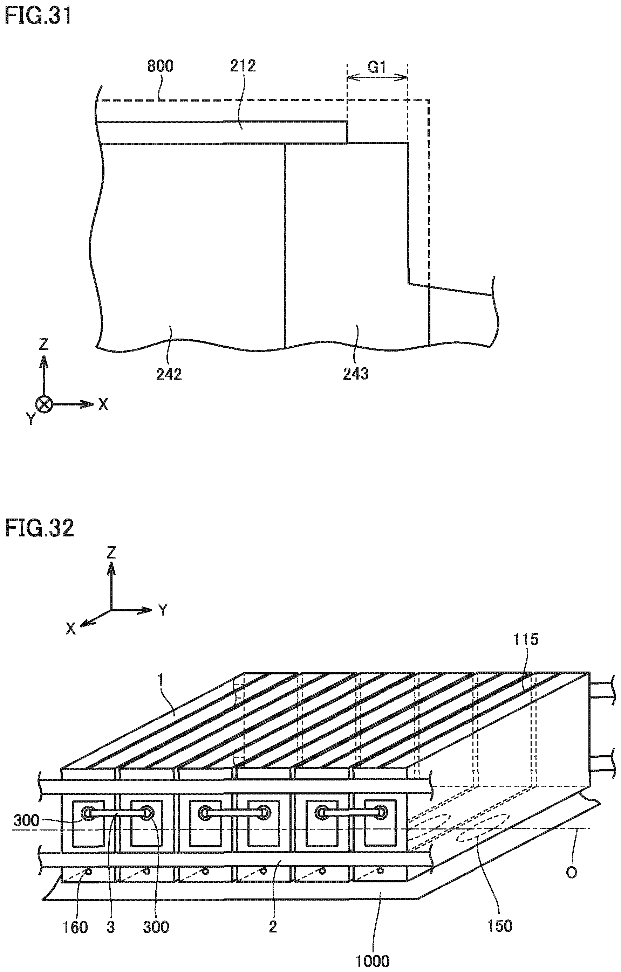

Fig. 30 is a schematic view showing a structure of electrode assembly 200, and Fig. 31 is an enlarged view of a portion XXXI in Fig. 30.

As shown in Figs. 30 and 31, at the end portion of the main body portion of electrode assembly 200 on the positive electrode tab group 250, 280 side, positive electrode protective layer 243 protrudes to the positive electrode tab group 250, 280 side with respect to the end portion of negative electrode active material layer 212. Positive electrode protective layer 243 protrudes to the positive electrode tab group 250, 280 side (+X side) by a distance G1 with respect to the end portion of negative electrode active material layer 212.

Here, positive electrode protective layer 243 protrudes with respect to the end portion of negative electrode active material layer 212 along the X direction (first direction) connecting opening 113 and opening 114. Positive electrode protective layer 243 protrudes with respect to the end portion of negative electrode active material layer 212 along the insertion direction of electrode assembly 200. Positive electrode protective layer 243 protrudes with respect to the end portion of negative electrode active material layer 212 along the direction perpendicular to each of sealing plates 120, 130.

Therefore, at the time of insertion of electrode assembly 200 into case main body 110, even when a certain load, for example, a load resulting from vibration to move electrode assembly 200 in case main body 110, is applied to the vicinity of the end portion of negative electrode active material layer 212 located in the +X direction, the end portion of negative electrode active material layer 212 can be suppressed from being damaged, thereby suppressing falling of the negative electrode active material. As a result, reliability of secondary battery 1 can be further improved.

Since the problem of falling of the negative electrode active material at the time of insertion of electrode assembly 200 into case main body 110 is likely to occur in the stacked type electrode assembly, a greater effect in suppressing the damage of the end portion of negative electrode active material layer 212 can be obtained by employing the structure shown in Figs. 30 and 31.

### (Mounting Structure on Vehicle)

Fig. 32 is a diagram showing a state in which a battery assembly including a plurality of secondary batteries 1 is mounted on a vehicle. As shown in Fig. 32, the plurality of secondary batteries 1 are mounted on a vehicle body 1000 with the plurality of secondary batteries 1 being arranged (stacked) along the Y direction and restrained in the Y direction by a binding bar 2. It should be noted that secondary battery 1 may be directly supported by a case (not shown) of a battery pack without using binding bar 2.

A bus bar 3 for electrically connecting electrode terminals 300 of adjacent secondary batteries 1 is provided.

When secondary battery 1 is regarded as a single cell and when the plurality of secondary batteries 1 are regarded as a battery assembly, the upper side and the lower side in the state in which secondary battery 1 is mounted on vehicle body 1000 can be specified, for example, as follows.

Secondary battery 1 according to the present embodiment is mounted on vehicle body 1000 such that the +Z side is oriented in the upward direction.

As shown in Fig. 32, each of electrode terminal 300 and bus bar 3 is disposed on the upper side (+Z side) with respect to the center (center line O) of case 100 in the Z direction. Injection hole 160 is disposed on the lower side (-Z side) with respect to center line O. Gas-discharge valve 150 is disposed on the lower side (-Z side) with respect to center line O. Joining portion 115 of case main body 110 is disposed on the upper side (+Z side) with respect to center line O.

On the other hand, folded portion 810 located below negative electrode plate 210 is disposed on the lower side (-Z side) with respect to center line O of case 100.

That is, in the example shown in Fig. 32, folded portion 810 located below negative electrode plate 210 is disposed opposite to each of electrode terminal 300 and bus bar 3 with respect to center line O of case 100, is disposed on the same side as injection hole 160 with respect to center line O, is disposed on the same side as gas-discharge valve 150 with respect to center line O, and is disposed opposite to joining portion 115 with respect to center line O.

However, the positional relation described above is a relative relation that changes depending on the arrangements of electrode terminal 300 or bus bar 3, injection hole 160, gas-discharge valve 150, and joining portion 115.

### (Modification of Secondary Battery 1)

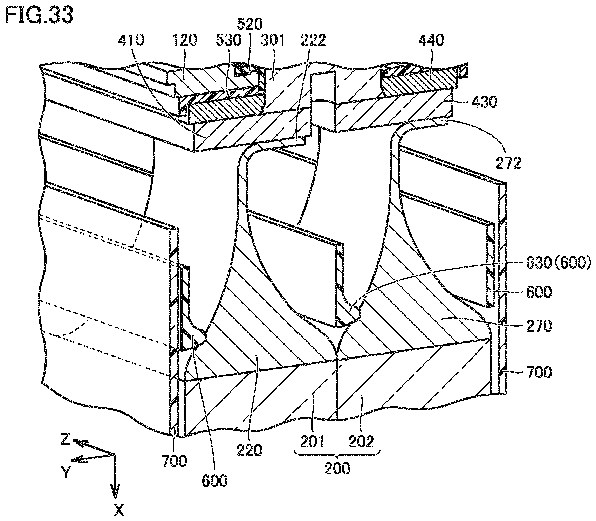

Fig. 33 is a cross sectional view showing a configuration of a secondary battery according to a modification. As shown in Fig. 33, in the secondary battery according to the modification, tip portions 222, 272 of negative electrode tab group 220 and negative electrode tab group 270 are bent in the same direction in the Y direction.

Thereafter, first electrode assembly 201 and second electrode assembly 202 are inserted into the case main body, and sealing plate 120 is brought into abutment with the case main body. Thus, negative electrode tab group 220 and negative electrode tab group 270 are curved in the same direction such that tip portions 222, 272 are oriented in the same direction. In order to facilitate curving of tip portions 222, 272 in the same direction, a third component 630 of spacer 600 is provided between negative electrode tab group 220 and negative electrode tab group 270.

Since tip portions 222, 272 of negative electrode tab group 220 and negative electrode tab group 270 are curved in the same direction in the Y direction, first electrode assembly 201 to which current collector 410 is attached and second electrode assembly 202 to which current collector 430 is attached can be prepared to have the same configuration. Thus, first electrode assembly 201 to which current collector 410 is attached and second electrode assembly 202 to which current collector 430 is attached can be configured as one type of electrode assembly, thus resulting in a simplified manufacturing process.

Further, in the present embodiment, it has been illustratively described that negative electrode terminal 301 is provided on sealing plate 120 and positive electrode terminal 302 is provided on sealing plate 130; however, the scope of the present technology is not limited thereto and electrode terminals 300 of the both electrodes may be provided on one sealing plate, for example.

Although the embodiments of the present invention have been described and illustrated in detail, it is clearly understood that the same is by way of illustration and example only and is not to be taken by way of limitation. The scope of the present invention is defined by the terms of the claims, and is intended to include any modifications within the scope and meaning equivalent to the terms of the claims.

## Claims

1. A non-aqueous electrolyte secondary battery (1) mounted on a vehicle, the non-aqueous electrolyte secondary battery (1) comprising:
an electrode assembly (200) in which a first electrode (210) and a second electrode (240) are stacked with a separator (800) being interposed between the first electrode (210) and the second electrode (240);
an electrode terminal (300) connected to the first electrode (210) or the second electrode (240); and
a case (100) that accommodates the electrode assembly (200) and an electrolyte solution, wherein
the case (100) includes a case main body (110) provided with a first opening (113) at one end portion of the case main body (110) in a first direction and a second opening (114) at the other end portion of the case main body (110) in the first direction, a first sealing plate (120) that seals the first opening (113), and a second sealing plate (130) that seals the second opening (114),
the electrode terminal (300) is attached to one of the first sealing plate (120) and the second sealing plate (130),
the first electrode (210) is longer than the second electrode (240) in a second direction orthogonal to the first direction,
the first electrode (210) and the second electrode (240) are alternately stacked in a third direction orthogonal to each of the first direction and the second direction,
the separator (800) has a meandering shape including a first folded portion (810) and a second folded portion (820) provided at respective end portions of the first electrode (210) and the second electrode (240) in the second direction, and
the first folded portion (810) of the separator (800) at the end portion of the first electrode (210) is located below the first electrode (210) when the non-aqueous electrolyte secondary battery (1) is mounted on the vehicle such that the second direction is oriented in an upward/downward direction.

2. The non-aqueous electrolyte secondary battery (1) according to claim 1, wherein the first electrode (210) is a negative electrode.

3. The non-aqueous electrolyte secondary battery (1) according to claim 2, wherein an active material of the negative electrode includes carbon.

4. The non-aqueous electrolyte secondary battery (1) according to claim 2 or 3, wherein
the electrode assembly (200) has a main body portion, a negative electrode tab (230) located on the first sealing plate (120) side with respect to the main body portion and provided on the first electrode (210), and a positive electrode tab (260) located on the second sealing plate (130) side with respect to the main body portion and provided on the second electrode (240),
the first electrode (210) includes a negative electrode core body (211) and a negative electrode active material layer (212) formed on the negative electrode core body (211),
the second electrode (240) includes a positive electrode core body (241), a positive electrode active material layer (242) formed on the positive electrode core body (241), and a positive electrode protective layer (243) formed on the positive electrode core body (241),
the positive electrode protective layer (243) is located on the positive electrode tab (260) side with respect to the positive electrode active material layer (242), and
at an end portion of the main body portion of the electrode assembly (200) on the positive electrode tab (260) side, the positive electrode protective layer (243) protrudes to the positive electrode tab (260) side with respect to an end portion of the negative electrode active material layer (212).

5. The non-aqueous electrolyte secondary battery (1) according to any one of claims 1 to 4, wherein the non-aqueous electrolyte secondary battery (1) is a lithium ion secondary battery (1).

6. The non-aqueous electrolyte secondary battery (1) according to any one of claims 1 to 5, wherein
the electrode terminal (300) is disposed on one side with respect to a center of the case (100) in the second direction, and
the first folded portion (810) is disposed opposite to the electrode terminal (300) with respect to the center.

7. The non-aqueous electrolyte secondary battery (1) according to any one of claims 1 to 6, wherein
an injection hole (160) for injecting the electrolyte solution into the case (100) is provided in the first sealing plate (120) or the second sealing plate (130),
the injection hole (160) is disposed on one side with respect to a center of the case (100) in the second direction, and
the first folded portion (810) is disposed on the same side as the injection hole (160) with respect to the center.

8. The non-aqueous electrolyte secondary battery (1) according to any one of claims 1 to 7, wherein
the case main body (110) is provided with a discharge valve (150) that is preferentially fractured when pressure in the case (100) becomes a predetermined value or more,
the discharge valve (150) is disposed on one side with respect to a center of the case (100) in the second direction, and
the first folded portion (810) is disposed on the same side as the discharge valve (150) with respect to the center.

9. The non-aqueous electrolyte secondary battery (1) according to any one of claims 1 to 8, wherein
the case main body (110) is formed to have a prismatic tubular shape by joining, at a joining portion (115), end sides of a plate-shaped member (303, 304) having been bent,
the joining portion (115) is disposed on one side with respect to a center of the case (100) in the second direction, and
the first folded portion (810) is disposed opposite to the joining portion (115) with respect to the center.

10. A battery assembly comprising a plurality of non-aqueous electrolyte secondary batteries (1), the battery assembly being mounted on a vehicle, wherein
each of the plurality of non-aqueous electrolyte secondary batteries (1) includes
an electrode assembly (200) in which a first electrode (210) and a second electrode (240) are stacked with a separator (800) being interposed between the first electrode (210) and the second electrode (240),
an electrode terminal (300) connected to the first electrode (210) or the second electrode (240), and
a case (100) that accommodates the electrode assembly (200) and an electrolyte solution, wherein
the case (100) includes a case main body (110) provided with a first opening (113) at one end portion of the case main body (110) in a first direction and a second opening (114) at the other end portion of the case main body (110) in the first direction, a first sealing plate (120) that seals the first opening (113), and a second sealing plate (130) that seals the second opening (114),
the electrode terminal (300) is attached to one of the first sealing plate (120) and the second sealing plate (130),
the first electrode (210) is longer than the second electrode (240) in a second direction orthogonal to the first direction,
the first electrode (210) and the second electrode (240) are alternately stacked in a third direction orthogonal to each of the first direction and the second direction,
the separator (800) has a meandering shape including a first folded portion (810) and a second folded portion (820) provided at respective end portions of the first electrode (210) and the second electrode (240) in the second direction, and
the first folded portion (810) of the separator (800) at the end portion of the first electrode (210) is located below the first electrode (210) when the battery assembly is mounted on the vehicle such that the second direction is oriented in an upward/downward direction.

11. The battery assembly according to claim 10, further comprising a bus bar (3) that connects the electrode terminals (300) of the plurality of non-aqueous electrolyte secondary batteries (1),
the bus bar (3) is disposed on one side with respect to a center of the case (100) in the second direction, and
the first folded portion (810) is disposed opposite to the bus bar (3) with respect to the center.

12. A vehicle comprising:
a vehicle body; and
a battery assembly including a plurality of non-aqueous electrolyte secondary batteries (1), the battery assembly being mounted on the vehicle body, wherein
each of the plurality of non-aqueous electrolyte secondary batteries (1) includes
an electrode assembly (200) in which a first electrode (210) and a second electrode (240) are stacked with a separator (800) being interposed between the first electrode (210) and the second electrode (240),
an electrode terminal (300) connected to the first electrode (210) or the second electrode (240), and
a case (100) that accommodates the electrode assembly (200) and an electrolyte solution, wherein
the case (100) includes a case main body (110) provided with a first opening (113) at one end portion of the case main body (110) in a first direction and a second opening (114) at the other end portion of the case main body (110) in the first direction, a first sealing plate (120) that seals the first opening (113), and a second sealing plate (130) that seals the second opening (114),
the electrode terminal (300) is attached to one of the first sealing plate (120) and the second sealing plate (130),
the first electrode (210) is longer than the second electrode (240) in a second direction orthogonal to the first direction,
the first electrode (210) and the second electrode (240) are alternately stacked in a third direction orthogonal to each of the first direction and the second direction,
the separator (800) has a meandering shape including a first folded portion (810) and a second folded portion (820) provided at respective end portions of the first electrode (210) and the second electrode (240) in the second direction, and
the battery assembly is mounted on the vehicle such that the second direction is oriented in an upward/downward direction, and the first folded portion (810) of the separator (800) at the end portion of the first electrode (210) is located below the first electrode (210).
